# EUROPEAN PATENT APPLICATION

(11) **EP 4 814 685 A1**
(43) Date of publication of application: **30.09.2026**
(21) Application number: 25190875.2
(22) Date of filing: 22.07.2025
(51) Int. Cl.: G06F 3/12, G06T 7/00, H04N 1/00

(54) **INFORMATION PROCESSING SYSTEM, PROGRAM, AND INFORMATION PROCESSING METHOD**

(30) Priority: 25.03.2025 JP 2025049274
(71) Applicant: FUJIFILM Business Innovation Corp., Minato-ku Tokyo (JP)
(72) Inventor: TAKEUCHI, Rina, Yokohama-shi, Kanagawa (JP); HAMA, Daigo, Yokohama-shi, Kanagawa (JP)
(74) Representative: Becker Kurig & Partner Patentanwälte mbB

(57) **Abstract**

An information processing system includes a processor configured to: access a storage device that stores an image example showing a printing defect detected in a past during inspection at each of plural detection levels; receive a detection level designated by a user; and execute a display process for acquiring an image example corresponding to the received detection level from the storage device and displaying the image example.

## Description

### BACKGROUND OF THE INVENTION

### (i) Field of the Invention

The present invention relates to an information processing system, a program, and an information processing method.

### (ii) Description of Related Art

In general, an inspection device that inspects the quality of printing compares a scanned image obtained by scanning a printed matter with original image data of the printed matter and determines whether or not a portion (hereinafter, referred to as a defect candidate) in which the two images differ is a printing defect from the size, density difference, and the like of the portion. The inspection device receives designation of inspection accuracy desired by a user and determines the printing defect with the designated inspection accuracy. In a case where the inspection accuracy is set to a stricter level, a smaller defect candidate or a defect candidate having a lower density difference is more likely to be determined to be the printing defect than in a case where the inspection accuracy is lower. A high-quality printed matter having few defects can be obtained. However, the number of printed matters determined to be defective products due to the presence of the defects increases, which results in deterioration of the yield. It is necessary to appropriately set the inspection accuracy in order to achieve a balance between the quality that meets user expectations and the yield.

JP6299203B and JP6672973B disclose the techniques according to the related art related to the setting of the inspection accuracy.

The device disclosed in JP6299203B detects a portion corresponding to a printing defect from an image obtained by reading a printed matter. The device displays the read image in order to set a threshold value, and a user observes the image and determines whether a printing defect is present or absent. In a case where there is a discrepancy in the determination of the printing defect between the device and the user, the user changes the setting value of the threshold value used by the device to determine the printing defect.

In a process of initially setting abnormality detection parameters, the device disclosed in JP6672973B forms a dedicated evaluation chart or an original image of a job is formed on paper, reads the paper, and generates a scanned image. The device detects all abnormalities that can be detected from the scanned image, using detection parameters that are most likely to detect the abnormalities, embeds abnormality detection information into the scanned image to generate a history image, and transmits the history image to a terminal of a user. The user displays the history image on the terminal and inputs an evaluation indicating whether or not to detect each abnormality shown in the history image. The device calculates detection parameters that satisfy the user's evaluation (see paragraphs 0064 to 0071 of JP6672973B).

### SUMMARY OF THE INVENTION

Even in a case where the original image of the document to be inspected is printed, the defect candidates are not necessarily included in the print result of the original image. In addition, even in a case where the defect candidates are included in the print result, it is rare that the print result includes a wide variety of candidate groups with gradual differences in size, density difference, and the like. Even in a case where a limited candidate group included in the print result of the original image is presented, it is not possible to designate the levels of the size, the density difference, and the like, which are not included in the candidate group, as boundaries for determining whether or not the candidate group corresponds to the printing defect. In a case where a large number of different original images are used, it is possible to obtain a wide variety of defect candidate groups. However, it places a large burden on the user to sequentially evaluate the print results of the large number of original images.

An object of the present disclosure is to reduce user's workload as compared to a method in which a user sequentially evaluates print results of a large number of images to set an inspection level.

According to a first aspect of the present disclosure, there is provided an information processing system including a processor configured to: access a storage device that stores an image example showing a printing defect detected in a past during inspection at each of a plurality of detection levels; receive a detection level designated by a user; and execute a display process for acquiring an image example corresponding to the received detection level from the storage device and displaying the image example.

According to a second aspect of the present disclosure, in the information processing system according to the first aspect, in the display process, a process for displaying a plurality of image examples corresponding to a plurality of consecutive detection levels including the designated detection level may be executed.

According to a third aspect of the present disclosure, in the information processing system according to the first aspect, the storage device may store the image example showing the printing defect corresponding to each characteristic of the printing defect detected at each of the plurality of detection levels for each characteristic, and the processor may be configured to: further receive a characteristic of the printing defect designated by the user; and execute a process for acquiring an image example corresponding to the received characteristic and detection level from the storage device and displaying the image example in the display process.

According to a fourth aspect of the present disclosure, in the information processing system according to the third aspect, in the display process, in a case where an image example corresponding to the received detection level is absent among the image examples corresponding to the received characteristic, a process for displaying an image example that corresponds to a characteristic other than the received characteristic and corresponds to the received detection level in a display aspect in which the image example is distinguishable from the image example corresponding to the received characteristic and detection level may be executed.

According to a fifth aspect of the present disclosure, in the information processing system according to the third aspect, the characteristic may be a type and color of the printing defect, a type of an object including the printing defect, or one or more combinations of the type, the color, and the type of the object.

According to a sixth aspect of the present disclosure, in the information processing system according to the first aspect, the detection level may be expressed as a level for a size of the printing defect, a level for a density difference between the printing defect and a corresponding portion of a reference image, or a combination of the level for the size and the level for the density difference.

According to a seventh aspect of the present disclosure, there is provided a program causing a computer capable of accessing a storage device that stores an image example showing a printing defect detected in a past during inspection at each of a plurality of detection levels to execute a process including: receiving a detection level designated by a user; and executing a display process for acquiring an image example corresponding to the received detection level from the storage device and displaying the image example.

According to an eighth aspect of the present disclosure, there is provided an information processing method including: receiving a detection level designated by a user; and executing a display process for acquiring an image example corresponding to the received detection level from a storage device and displaying the image example.

According to the first aspect, the sixth aspect, the seventh aspect, or the eighth aspect of the present disclosure, it is possible to reduce the user's workload, as compared to a method in which the user sequentially evaluates the print results of a large number of images to set the inspection level.

According to the second aspect of the present disclosure, it is possible to present, to the user, how the detectable printing defect varies depending on a gradual difference in the detection level.

According to the third aspect or the fifth aspect of the present disclosure, it is possible to filter the image examples stored in the storage device to the image examples having the characteristic designated by the user and to present the image examples to the user.

According to the fourth aspect of the present disclosure, even in a case where there is no image example corresponding to the designated characteristic, it is possible to present an image example that does not correspond to the characteristic, but corresponds to the designated detection level, while indicating that the image example does not correspond to the characteristic.

### BRIEF DESCRIPTION OF THE DRAWINGS

Exemplary embodiment(s) of the present invention will be described in detail based on the following figures, wherein:
FIG. 1 is a diagram showing a functional configuration of an inspection system according to an exemplary embodiment;
FIG. 2 is a diagram showing a setting user interface (UI) for an inspection level;
FIG. 3 is a diagram showing content of data in a defect image database;
FIG. 4 is a diagram showing a setting screen including the setting UI and a preview field;
FIG. 5 is a diagram showing a setting screen that displays a list of image examples corresponding a plurality of consecutive inspection levels;
FIG. 6 is a diagram showing a preview field including a filtering UI;
FIG. 7 is a diagram showing content of data in a defect image database in which information of characteristics, such as types and colors of printing defects, is also registered;
FIG. 8 is a diagram showing a display example in a case where an image example corresponding to a designated characteristic is not present in the defect image database; and
FIG. 9 is a diagram showing a processing procedure of the inspection system in a case where printing inspection is performed.

### DETAILED DESCRIPTION OF THE INVENTION

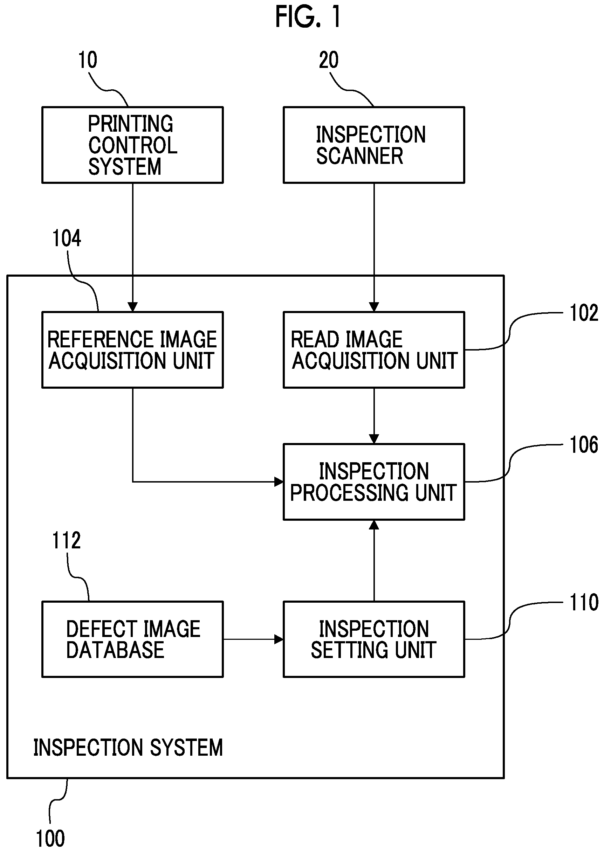

FIG. 1 shows a configuration of a system according to an exemplary embodiment of the present disclosure.

An inspection system 100 shown in FIG. 1 is connected to a printing control system 10 and an inspection scanner 20.

The printing control system 10 controls a printing device (not shown) to execute printing. That is, the printing control system 10 processes print data described in a page description language or the like to generate image data, such as a bitmap image, that can be handled by the printing device. Then, the printing control system 10 supplies the image data to the printing device to execute printing. The printing control system 10 is implemented using a single computer or a set of a plurality of computers.

The inspection scanner 20 optically reads a surface of a medium (for example, paper) (hereinafter, referred to as a printed medium) after printing by the printing device to generate image data. The generated image data is referred to as read image data.

The inspection system 100 is a system that inspects the quality of the printed medium generated by the printing device. This inspection is performed, for example, to find defective products and to automatically remove the defective products. The inspection system 100 compares the read image data generated by the reading of the printed medium by the inspection scanner 20 with the image data used to obtain the printed medium to perform the inspection.

The inspection system 100 includes a read image acquisition unit 102, a reference image acquisition unit 104, an inspection processing unit 106, an inspection setting unit 110, and a defect image database 112 as functional modules. The read image acquisition unit 102 acquires the read image data generated by the reading of the printed medium by the inspection scanner 20 from the inspection scanner 20. The reference image acquisition unit 104 acquires the image data used to obtain the printed medium from the printing control system 10. This image data represents an image to be printed on the medium and can be said to represent a correct answer in the inspection of print quality. This image data is referred to as reference image data.

The inspection processing unit 106 compares the read image data with the reference image data to inspect the quality of the printed medium. The inspection processing unit 106 detects a portion (hereinafter, referred to as a difference portion) of the read image data that is different from the reference image data as a printing defect and records the difference portion in a database (not shown) that stores the inspection results or notifies the user of the difference portion. In addition, the inspection processing unit 106 may determine whether the printed medium is good or bad based on, for example, the area, density difference, and number of printing defects detected from the printed medium. In a case where the inspection processing unit 106 determines that the printed medium is a defective product, for example, the inspection processing unit 106 notifies the printing control system 10 of the fact. The printing control system 10 executes a predetermined defective product handling process in response to the notification. The defective product handling process includes, for example, a process of discharging the printed medium to a defective product discharge destination. In addition, the defective product handling process may include a process of reprinting the page that has been determined to be the defective product. The functions of the inspection processing unit 106 are the same as the functions known in the related art.

Here, in a case where all of the difference portions are detected as the printing defects, even minor defective portions that do not affect the quality of the printed matters are recorded and reported as the printing defects, which impairs printing productivity. Therefore, a detection level for the printing defect is set in the inspection processing unit 106. The inspection processing unit 106 detects the printing defect according to the set inspection level.

The detection level is a value indicating the degree of the difference portion detected as the printing defect. A difference portion of which the degree is equal to or higher than the detection level is detected as the printing defect, and a difference portion of which the degree is lower than the detection level is not detected as the printing defect. The detection level is determined by, for example, the size of the difference portion, that is, the area size. In addition, in another example, a detection level for the density difference between the difference portion and the correct answer is determined. Further, a detection level for a combination of the size and density difference of the difference portion may be determined.

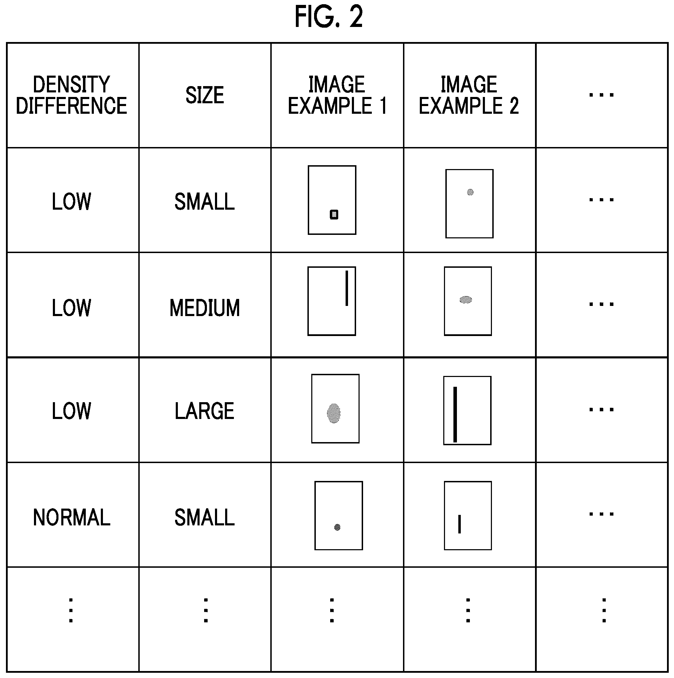

Furthermore, the density difference includes a positive density difference and a negative density difference. The positive density difference is caused by "contamination" due to printing. The contamination occurs in a case where at least one printing color (for example, cyan, magenta, yellow, or black) is printed with a higher density than the printing color shown in the reference image data. For example, the contamination of a blank region caused by the deposition and printing of a black coloring material (for example, toner or ink) on a region that is not originally intended to be printed is detected as the positive density difference. Conversely, the negative density difference occurs due to "chipping" in the print. The chipping occurs in a case where at least one printing color is printed (or not printed) with a lower density than the printing color shown in the reference image data. For example, a portion of the coloring material of the printed text peels off for some reason, which results in the chipping. In a setting screen shown in FIG. 2, the vertical axis represents the magnitude, that is, the absolute value of the density difference. However, this is only an example. For example, instead of this, the positive density difference and the negative density difference may be separately designated on the setting screen.

The inspection setting unit 110 receives various settings for the inspection process performed by the inspection processing unit 106. The settings include the setting of the inspection level described above.

The inspection setting unit 110 receives the setting of the inspection level, for example, using a setting user interface (UI) shown in FIG. 2. This setting UI is an example used in a method in which the detection level is determined by a combination of the size and density difference of the difference portion.

The setting UI shown in FIG. 2 is represented in a table form. Three levels of density difference of low, normal, and high are assigned to rows of the table, and three levels of size of small, medium, and large are assigned to columns of the table. The presence or absence of a cell where the row and the column intersect indicates whether or not a difference portion corresponding to a combination of the density difference indicated by the row and the size indicated by the column is detected as the printing defect. In a case where there is a check mark in the cell, a difference portion having the density difference and the size corresponding to the cell is detected as the printing defect. Hereinafter, for simplicity, the check mark is referred to as a "check". For example, the user operates a pointing device or performs a touch operation on a touch panel to touch a cell in the table, thereby checking or unchecking the cell. In a case where the user checks a certain cell, the inspection setting unit 110 automatically checks each cell on the right side of the checked cell and each cell on the lower side of the checked cell. The reason is that, in a case where a difference portion with a certain density difference and size is determined to be the printing defect, a difference portion that has the same density difference as and a larger area than the difference portion determined to be the printing defect and a difference portion that has the same size as and a larger density difference than the difference portion determined to be the printing defect should naturally be detected as the printing defects. In the same manner, in a case where the user unchecks a certain cell, the inspection setting unit 110 automatically unchecks each cell on the left side of the unchecked cell and each cell on the upper side of the unchecked cell. It is a general tendency that a difference portion that has a small density difference, but has a large size and a difference portion that has a small size, but has a large density difference are highly likely to be determined to be the printing defects.

In order for the user to configure settings that are intended by the user using this setting UI, it is necessary for the user to understand what sizes and density differences of the printing defects will be detected in a case where a certain cell is checked. For this purpose, in a case where the user designates a cell in the table shown in FIG. 2, the inspection setting unit 110 presents, to the user, an example of an image (hereinafter, referred to as a defect image example) of the printing defect detected at an inspection level (in this case, a combination of the size and the density difference) corresponding to the designated cell. A large number of defect image examples are registered in the defect image database 112.

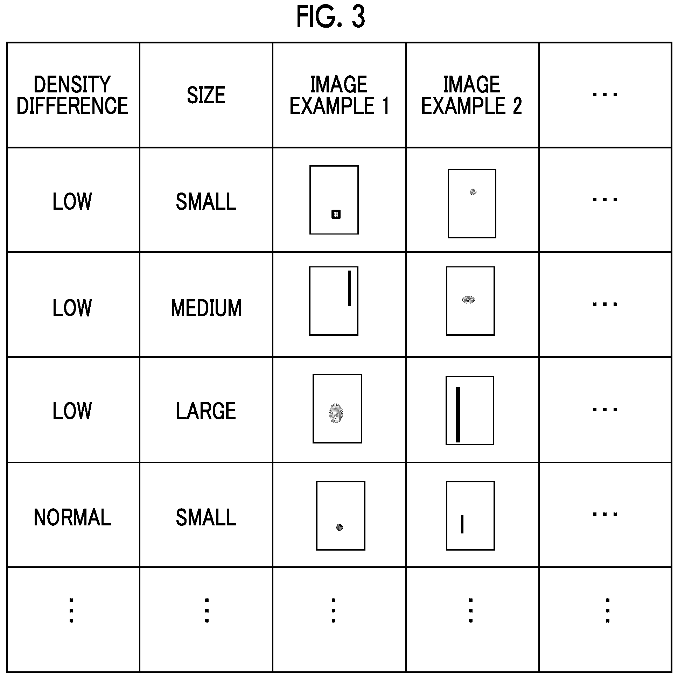

FIG. 3 schematically shows an example of the data registered in the defect image database 112. As shown in FIG. 3, in the defect image database 112, defect image examples (shown in columns labeled "image example 1" and "image example 2" in FIG. 3) are registered for each combination of a size class and a density difference class indicated by each cell in the setting UI (see FIG. 2).

The image example registered in the defect image database 112 is based on, for example, the read image data (in other words, the printed medium inspected in the past) inspected in the past by the inspection processing unit 106. The image example may be an image represented by the read image data or may be an image obtained by adding information (for example, a frame surrounding the detected printing defect) for specifying the printing defect detected from the image to the image. In addition, an image obtained by cutting out a partial portion including the printing defect in the image may be registered as the image example or as reference information associated with the image example in the defect image database 112. The date and time when the printed medium, from which the image example was derived, was inspected and other attribute information may be registered in the defect image database 112 in association with the image example. In addition, the image example may not be limited to the image actually inspected in the past, and an image created in advance as a sample of the printing defect detected at each detection level may be registered in the defect image database 112.

Further, as described above, in a case where a certain combination of the size and the density difference is checked as an object to be detected on the setting UI, in addition to a printing defect corresponding to the combination, a printing defect corresponding to a combination of the same size and a larger density difference or a printing defect corresponding to a combination of the same density difference and a larger size is detected. However, in a row corresponding to a certain combination of the size and the density difference, only the image example corresponding to the combination is registered in the defect image database 112. An image example corresponding to a combination of the same size and a larger density difference and an image example corresponding to a combination of the same density difference and a larger size are not registered in the row.

In the example shown in FIG. 1, the inspection system 100 includes the defect image database 112, but this is only an example. The defect image database 112 may be provided outside the inspection system 100.

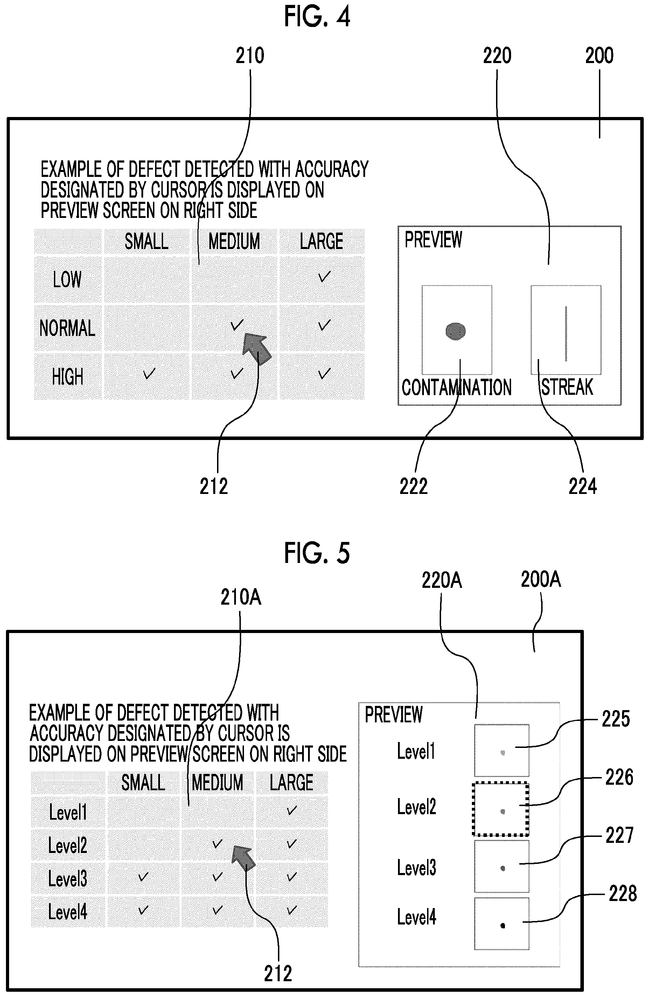

FIG. 4 shows a setting screen 200 provided by the inspection setting unit 110. The setting screen 200 includes a setting UI 210 and a preview field 220. The setting UI 210 has been described above with reference to FIG. 2. In a case where the user operates, for example, the pointing device to position a cursor 212 on a desired cell in the setting UI 210 on the screen, the inspection setting unit 110 acquires image examples 222 and 224 corresponding to a combination of the size and the density difference corresponding to the cell from the defect image database 112 and displays the image examples 222 and 224 in the preview field 220. In the example shown in FIG. 4, the two image examples 222 and 224 are displayed in the preview field 220. However, the two image examples are only an example.

A large number of image examples corresponding to the combination are registered in the defect image database 112. The image examples to be currently displayed in the preview field 220 may be randomly selected from the image examples or may be selected according to a predetermined rule such as selection in a reverse chronological order. In addition, a graphical user interface (GUI), for example, a button for calling "another example" may be displayed in association with the preview field 220. In this case, in a case where the user presses the "Another Example" button, the inspection setting unit 110 reads out another image example corresponding to the combination from the defect image database 112 and displays the read image example in the preview field 220.

The user knows an example of the printing defect that can be detected in a case where the cell indicated by the cursor 212 is checked through the preview field 220.

FIG. 5 shows a setting screen 200A which is another example of the setting screen provided by the inspection setting unit 110. In the setting UI 210A in the setting screen 200A, the vertical axis represents four levels of density difference, ranging from Level 1 to Level 4. The density difference increases as the level number increases, starting from Level 1. Image examples 225 to 228 of a plurality of consecutive density difference levels including an image example 226 corresponding to the cell on which the cursor 212 is positioned are displayed in a column in a preview field 220A. The image examples 225 to 228 have the same size, but differ gradually in density difference. The image example 226 is highlighted (in the example shown in FIG. 5, the image example 226 is surrounded by a dotted line frame, but this is only an example) to indicate that the image example 226 corresponds to the cell designated by the cursor 212.

The display of the preview field 220A makes it possible for the user to know how much the detected printing defect changes depending on a difference in the level of the density difference.

Now, some printing defects differ in characteristics such as color and type. For example, as the types of printing defects viewed from one aspect, there are types of printing defects categorized by nature, such as the above-described "contamination" and "chipping". In addition, as the types of the printing defects viewed from another aspect, there are types of printing defects categorized by shape, such as "blot-shaped" and "streak-shaped" defects. Further, types which are combinations of the types categorized by nature and the types categorized by shape may also be defined.

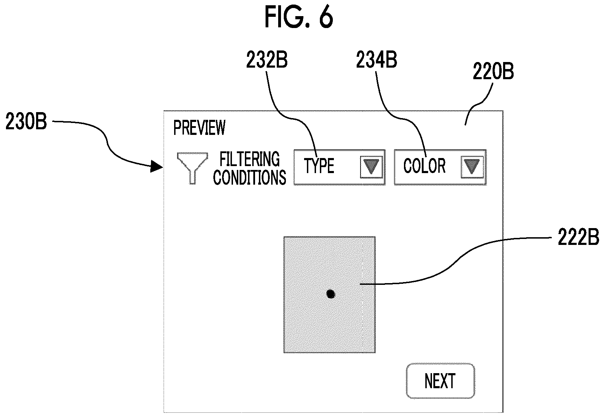

A preview field 220B shown in FIG. 6 includes a filtering UI 230B for receiving the designation of filtering conditions for an image example 222B to be displayed. In the example shown in FIG. 6, the filtering UI 230B includes a type designation field 232B and a color designation field 234B. The type designation field 232B is a UI for receiving the designation of the type of printing defect. For example, a list of selectable types is provided as a pull-down menu. The color designation field 234B is a UI for receiving the designation of the color of the printing defect. For example, a list of selectable colors is provided as a pull-down menu. The user can designate at least one of the type or the color from the pull-down menus. The inspection setting unit 110 selects the image example 222B corresponding to a combination of the type and the color designated in the filtering UI 230B from the image examples corresponding to the cell designated on the setting UI 210 and displays the image example 222B in the preview field 220B.

As described above, the preview field 220B shown in FIG. 6 makes it possible for the user to designate the conditions for filtering the characteristics of the printing defect that the user wants to view.

In the example shown in FIG. 6, the type and color of the printing defect are given as an example of the characteristics of the printing defect which are the filtering conditions. However, other characteristics can also be used as the filtering conditions. For example, the type of the object in which the printing defect has occurred may be used as a characteristic for defining the filtering conditions. The object mentioned here is an image element, such as a text, a figure, or a bitmap image (for example, a photographic image), included in the image (in other words, reference image data) printed on the medium. The print data described in the page description language or the like includes a description representing each object. The object in which the printing defect has occurred is an object having a portion overlapping the printing defect on the printed medium. For example, in a case where chipping or contamination is detected in a portion of the printed image on the printed medium corresponding to a certain figure object in the reference image data, the type of the object in which the chipping or the contamination has occurred is a "figure". It is possible to specify which object the detected printing defect has occurred in from, for example, the print data. That is, the position and range of each object on the page can be specified from the description of each object in the page description language in the print data. The position of the detected printing defect may be compared with the position or range of each object to specify the object that positionally overlaps the printing defect as the object in which the printing defect has occurred.

As described above, since the type of object is designated as the filtering condition, it is possible to check the printing defect that has occurred in that type of object among the printing defects detected at the detection level designated in the setting UI 210.

In addition, among the printing defects, the contamination often occurs in a blank region in which there are no objects on the page. As described above, for the printing defect in the blank region, since there is no object in which the printing defect has occurred, there is no type of object in which the printing defect has occurred.

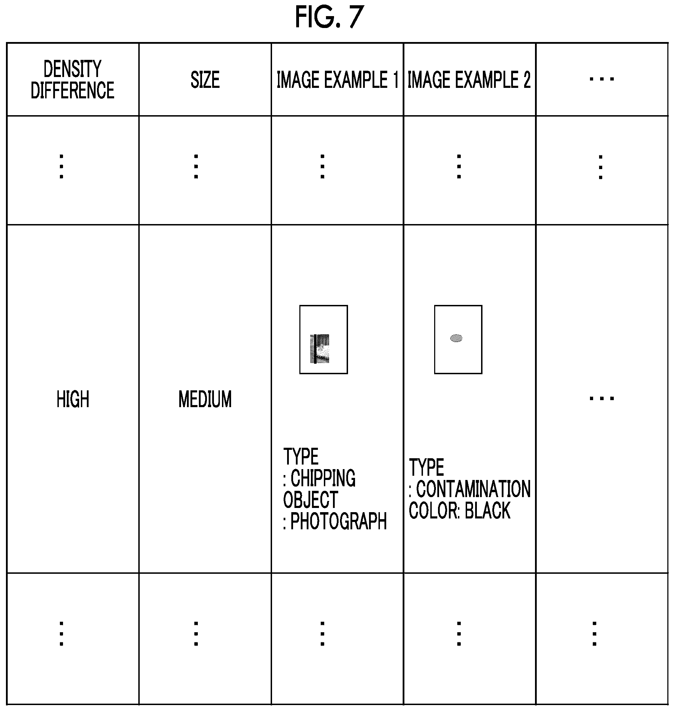

FIG. 7 shows an example of the content of the data in the defect image database 112 for achieving the UI that enables filtering the characteristics of the printing defects shown in FIG. 6. In this example, for each of the image examples listed in the row of the combination of the size and the density difference, attribute information representing each characteristic of the image example is registered. For example, for image example 1 of the printing defect in which the density difference is "high" and the size is "medium", attribute information indicating that the type of the printing defect shown in image example 1 is "chipping" and the object in which the printing defect has occurred is a "photographic image" is associated with image example 1. Further, since the "chipping" has no color, the attribute of the color is not associated with the "chipping". In addition, attribute information indicating that the type of the printing defect shown in image example 2 is "contamination" and the color is "black" is associated with image example 2 in the same row. Since the "contamination" is positioned in the blank region, the attribute indicating the type of the object in which the contamination has occurred is not included. The inspection setting unit 110 extracts the image example corresponding to the filtering condition designated by the user with reference to the defect image database 112.

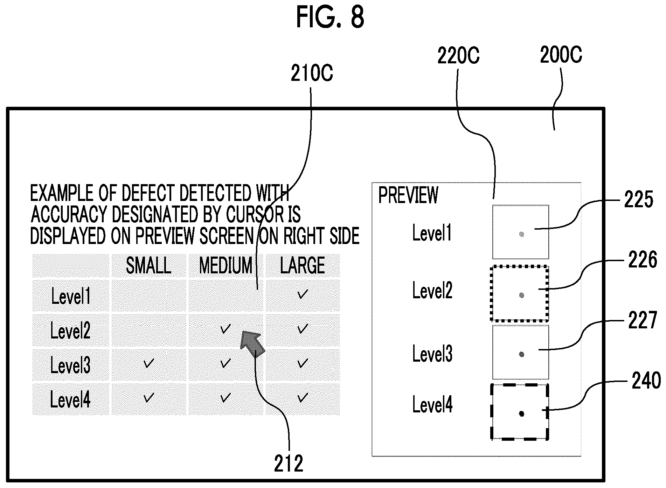

FIG. 8 shows a setting screen 200C which is still another example of the setting screen provided by the inspection setting unit 110. A setting UI 210C in the setting screen 200C is the same as the setting UI 210A of the setting screen 200A shown in FIG. 5. In addition, a preview field 220C is a modification of the preview field 220A shown in FIG. 5. Further, in this example, it is assumed that the image examples having the characteristics satisfying the filtering conditions designated by the filtering UI 230B shown in FIG. 6 are displayed in the preview field 220C, which is not shown in order to avoid complexity.

A situation is considered in which image examples are not available for all of the detection levels in the defect image database 112. For example, there is a wide variety of combinations of attributes, such as the density difference, the size, and the defect type, the color, and the object type constituting the filtering conditions, and it is quite possible that image examples will not be available for all of the various combinations. The example shown in FIG. 8 is an example of the setting screen 200C presented by the inspection setting unit 110 in this situation.

In the example shown in FIG. 8, in addition to the image example 226 corresponding to the combination of the density difference and the size indicated by the cursor 212, a plurality of image examples 225 and 227 that satisfy the same filtering conditions, have the same size, and have continuously different density difference levels are displayed in the preview field 220C. However, it is assumed that, for the highest density difference level (represented by "Level 4" in FIG. 8) among four display frames prepared in the preview field 220C, an image example that satisfies the same filtering conditions and has the same size is not found in the defect image database 112. In this case, for Level 4, the inspection setting unit 110 searches for the image example 240 that have the same density difference and size classes, but do not satisfy some of the filtering conditions from the defect image database 112 and displays the image example 240. The image example 240 is displayed in an aspect in which the image example 240 is distinguishable from other image examples 225 to 227 (for example, the image example 240 is highlighted, for example, by being surrounded by a frame) in order to indicate that the image example 240 does not completely satisfy the filtering conditions.

Therefore, even in a case where there is no image example that completely satisfies the filtering conditions, an image example belonging to the same class at least in terms of size and density difference is provided to the user.

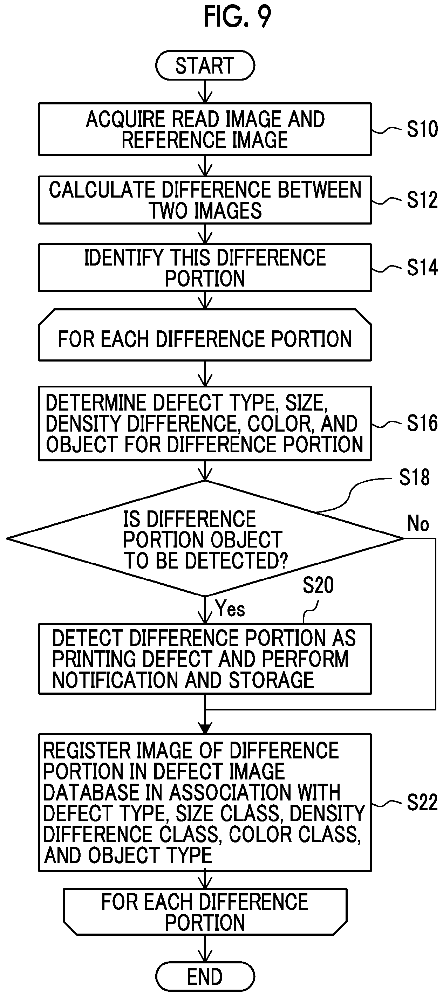

Next, an example of the processing procedure executed by the inspection system 100 in the inspection of the printed medium will be described with reference to FIG. 9.

In this example, first, the read image acquisition unit 102 acquires the image of the printed medium (that is, the read image data) generated by the inspection scanner 20, and the reference image acquisition unit 104 acquires reference image data corresponding to the printed medium from the printing control system 10 (S10). Then, the inspection processing unit 106 calculates a pixel-by-pixel difference between the read image data and the reference image data (S12). For example, in a case where the difference is a positive value, the pixel corresponds to the chipping. In a case where the difference is a negative value, the pixel corresponds to the contamination. The result of the pixel-by-pixel difference constitutes one image, and this image is referred to as a difference image. In addition, a pixel whose difference value is not 0 is referred to as a difference pixel.

Then, the inspection processing unit 106 forms connected components of the difference pixels (that is, sequences of adjacent difference pixels) in the difference image and recognizes each of the formed connected components as an individual difference portion (S14). Then, the inspection processing unit 106 executes the processes in Steps S16 to S22 for each individual difference portion.

That is, the inspection processing unit 106 determines the size, the density difference, the type (for example, the contamination or the chipping) of printing defect, the color, the type of object to which the difference portion belongs, and the like for the difference portion to be processed (S16). In this determination, it is determined to which of the classes determined for the size, the density difference, and the color the difference portion corresponds.

Then, the inspection processing unit 106 determines whether or not the difference portion corresponds to the printing defect to be detected (S18). In this determination, it is determined whether or not the difference portion corresponds to the inspection level set in the setting UI 210. For example, in a case where the same inspection level as the inspection level shown in the setting UI 210 in FIG. 3 is set and the difference portion corresponds to any of the size class "small" and the density difference class "high", the size class "medium" and the density difference class "normal" or "high", or the size class "large" and the density difference class "low", "normal", or "high", the difference portion is determined to be the printing defect to be detected.

In a case where the determination result in Step S18 is "Yes", the inspection processing unit 106 records the difference portion as the printing defect in the inspection result database and notifies that the printing defect has been found (S20). This notification may be performed by, for example, a method that displays the difference portion as the printing defect to be highlighted on the inspection screen currently being displayed. The inspection processing unit 106 may execute a defective product handling process such as a process of sorting the printed medium, in which the printing defect has been found, as the defective product.

After Step S20 or in a case where the determination result in Step S18 is "No", the inspection processing unit 106 registers the image example showing the difference portion in the defect image database 112 in association with the size class, the density difference class, the color class, the defect type, and the object type determined in Step S16 (S22). Here, the image example registered in the defect image database 112 may be, for example, the image of the difference portion or may be an image in which the difference portion has been highlighted (for example, surrounded by a broken line or the like) in the read image data.

The printed medium is inspected and the image example of the printing defect detected from the printed medium is accumulated in the defect image database 112 by the above-described process.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

### (Supplementary Notes)

(((1))) An information processing system comprising:
   a processor configured to:
   access a storage device that stores an image example showing a printing defect detected in a past during inspection at each of a plurality of detection levels;
   receive a detection level designated by a user; and
   execute a display process for acquiring an image example corresponding to the received detection level from the storage device and displaying the image example.
(((2))) The information processing system according to (((1))),
   wherein, in the display process, a process for displaying a plurality of image examples corresponding to a plurality of consecutive detection levels including the designated detection level is executed.
(((3))) The information processing system according to (((1))),
   wherein the storage device stores the image example showing the printing defect corresponding to each characteristic of the printing defect detected at each of the plurality of detection levels for each characteristic, and
   the processor is configured to:
      further receive a characteristic of the printing defect designated by the user; and
      execute a process for acquiring an image example corresponding to the received characteristic and detection level from the storage device and displaying the image example in the display process.
(((4))) The information processing system according to (((3))),
   wherein, in the display process, in a case where an image example corresponding to the received detection level is absent among the image examples corresponding to the received characteristic, a process for displaying an image example that corresponds to a characteristic other than the received characteristic and corresponds to the received detection level in a display aspect in which the image example is distinguishable from the image example corresponding to the received characteristic and detection level is executed.
(((5))) The information processing system according to (((3))),
   wherein the characteristic is a type and color of the printing defect, a type of an object including the printing defect, or one or more combinations of the type, the color, and the type of the object.
(((6))) The information processing system according to (((1))),
   wherein the detection level is expressed as a level for a size of the printing defect, a level for a density difference between the printing defect and a corresponding portion of a reference image, or a combination of the level for the size and the level for the density difference.
(((7))) A program causing a computer capable of accessing a storage device that stores an image example showing a printing defect detected in a past during inspection at each of a plurality of detection levels to execute a process comprising:
   receiving a detection level designated by a user; and
   executing a display process for acquiring an image example corresponding to the received detection level from the storage device and displaying the image example.

According to the configuration of (((1))), (((6))), or (((7))), it is possible to reduce the user's workload, as compared to a method in which the user sequentially evaluates the print results of a large number of images to set the inspection level.

According to the configuration of (((2))), it is possible to present, to the user, how the detectable printing defect varies depending on a gradual difference in the detection level.

According to the configuration of (((3))) or (((5))), it is possible to filter the image examples stored in the storage device to the image examples having the characteristic designated by the user and to present the image examples to the user.

According to the configuration of (((4))), even in a case where there is no image example corresponding to the designated characteristic, it is possible to present an image example that does not correspond to the characteristic, but corresponds to the designated detection level, while indicating that the image example does not correspond to the characteristic.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: printing control system
20: inspection scanner
100: inspection system
102: read image acquisition unit
104: reference image acquisition unit
106: inspection processing unit
110: inspection setting unit
112: defect image database

## Claims

1. An information processing system comprising:
a processor configured to:
access a storage device that stores an image example showing a printing defect detected in a past during inspection at each of a plurality of detection levels;
receive a detection level designated by a user; and
execute a display process for acquiring an image example corresponding to the received detection level from the storage device and displaying the image example.

2. The information processing system according to claim 1,
wherein, in the display process, a process for displaying a plurality of image examples corresponding to a plurality of consecutive detection levels including the designated detection level is executed.

3. The information processing system according to claim 1,
wherein the storage device stores the image example showing the printing defect corresponding to each characteristic of the printing defect detected at each of the plurality of detection levels for each characteristic, and
the processor is configured to:
further receive a characteristic of the printing defect designated by the user; and
execute a process for acquiring an image example corresponding to the received characteristic and detection level from the storage device and displaying the image example in the display process.

4. The information processing system according to claim 3,
wherein, in the display process, in a case where an image example corresponding to the received detection level is absent among the image examples corresponding to the received characteristic, a process for displaying an image example that corresponds to a characteristic other than the received characteristic and corresponds to the received detection level in a display aspect in which the image example is distinguishable from the image example corresponding to the received characteristic and detection level is executed.

5. The information processing system according to claim 3,
wherein the characteristic is a type and color of the printing defect, a type of an object including the printing defect, or one or more combinations of the type, the color, and the type of the object.

6. The information processing system according to claim 1,
wherein the detection level is expressed as a level for a size of the printing defect, a level for a density difference between the printing defect and a corresponding portion of a reference image, or a combination of the level for the size and the level for the density difference.

7. A program causing a computer capable of accessing a storage device that stores an image example showing a printing defect detected in a past during inspection at each of a plurality of detection levels to execute a process comprising:
receiving a detection level designated by a user; and
executing a display process for acquiring an image example corresponding to the received detection level from the storage device and displaying the image example.

8. An information processing method comprising:
receiving a detection level designated by a user; and
executing a display process for acquiring an image example corresponding to the received detection level from a storage device and displaying the image example.
